# EUROPÄISCHE PATENTSCHRIFT

(11) **EP 0 982 999 B1**
(45) Veröffentlichungstag und Bekanntmachung des Hinweises auf die Patenterteilung: **12.06.2002**
(21) Anmeldenummer: 98925438.8
(22) Anmeldetag: 24.03.1998
(51) Int. Cl.: A23J 3/14

(54) **VERFAHREN SOWIE VORRICHTUNG ZUR SCHONENDEN MODIFIZIERUNG FUNKTIONELLER EIGENSCHAFTEN EINES PROTEINPRÄPARATES**
METHOD AND DEVICE FOR CHANGING THE FUNCTIONAL FEATURES, WITH NO ALTERATION THEREOF, OF A PROTEIN PREPARATION
PROCEDE ET DISPOSITIF DE MODIFICATION, SANS RISQUE D'ALTERATION, DES PROPRIETES FONCTIONNELLES D'UNE PREPARATION PROTEINIQUE

(30) Priorität: 20.05.1997 DE 19721079
(43) Veröffentlichungstag der Anmeldung: 08.03.2000
(73) Patentinhaber: FRAUNHOFER-GESELLSCHAFT ZUR FÖRDERUNG DER ANGEWANDTEN FORSCHUNG E.V., 80636 München (DE)
(72) Erfinder: LUCK, Thomas, D-80992 München (DE); PFEIFER, Thomas, D-80799 München (DE); WÄSCHE, Andreas, D-85416 Langenbach (DE)
(86) Internationale Anmeldenummer: DE9800865
(87) Internationale Veröffentlichungsnummer: WO9852426

(56) Entgegenhaltungen:
- WO-A-88/05906
- CH-A- 595 054
- GB-A- 2 098 040
- US-A- 5 403 564
- GOULD R.F.: "Functionality and protein structure" 1979 , ACS SYMPOSIUM SERIES , WASHINGTON USA XP002080017 siehe Seite 147-148 siehe Seite 169-171
- VASAVADA P.C., BASTIAN E.D., MARTH E.H.: "Chemical and functional changes in milk caused by heating in a waterbath or microwave oven " MILCHWISSENSCHAFT, Bd. 50, Nr. 10, 1995, Seite 553-556 XP002080015
- YOUNG G S ET AL: "MICROWAVES: THE POTENTIAL FOR USE IN DAIRY PROCESSING" AUSTRALIAN JOURNAL OF DAIRY TECHNOLOGY, Bd. 45, Nr. 1, 1. Mai 1990, Seiten 34-37, XP000133831
- KING J., AGUIRRE C., DE PABLO S.: "Functional properties of Lupin Protein Isolates" JOURNAL OF FOOD SCIENCE, Bd. 50, 1985, Seite 82-87 XP002080016 in der Anmeldung erwähnt
- DATABASE WPI Section Ch, Week 9625 Derwent Publications Ltd., London, GB; Class D14, AN 96-249723 XP002080018 & RU 2 045 919 C (MIR PRODN ASSOC) , 20. Oktober 1995

## Beschreibung

### Technisches Gebiet

Die Erfindung bezieht sich auf ein Verfahren sowie eine Vorrichtung zur schonenden Modifizierung funktioneller Eigenschaften eines Proteinpräparates, vorzugsweise von Proteinisolat oder -konzentrat aus pflanzlichen Samen, durch Erwärmen des Proteinpräparates, für die Herstellung von Frisch- oder Trockenprodukte als Grund- oder Zusatzstoff für eiweißhaltige Lebensmittel.

### Stand der Technik

Zur Verwertung von Proteinen, vorzugsweise zur Herstellung von Lebensmitteln, müssen die in der Natur vorkommenden Proteine aus dem natürlichen Vorkommen extrahiert und je nach Verwendungszweck behandelt werden, um ihre funktionellen Eigenschaften, wie beispielsweise das Wasserbindungsvermögen, die Dispergierbarkeit sowie das Ölbindungsverhalten, um nur einige zu nennen, in bestimmter Weise einzustellen.

Bekanntlich werden pflanzliche Proteine durch Extraktion der pflanzlichen Samen als Proteinkonzentrate oder Proteinisolate gewonnen. Grundsätzlich werden zur Extraktion der Proteine aus den pflanzlichen Samen Lösemittel eingesetzt, die im Falle der Gewinnung von Proteinkonzentraten üblicherweise wässrige alkoholische Lösungen oder Wasser entsprechen. Bei der Gewinnung von Proteinisolierung werden hingegen üblicherweise salzhaltige Lösungen oder Wasser mit Zugabe von Laugen, beispielsweise NaOH, oder Wasser mit Zugabe von Säuren, beispielsweise HCI, verwendet. Bekannte Extraktionstechniken sind auch in dem Buch von Salunkhe, D.K., "World Oilseeds", Chemistry, Technology and Utilization. a book 1992 New York, beschrieben.

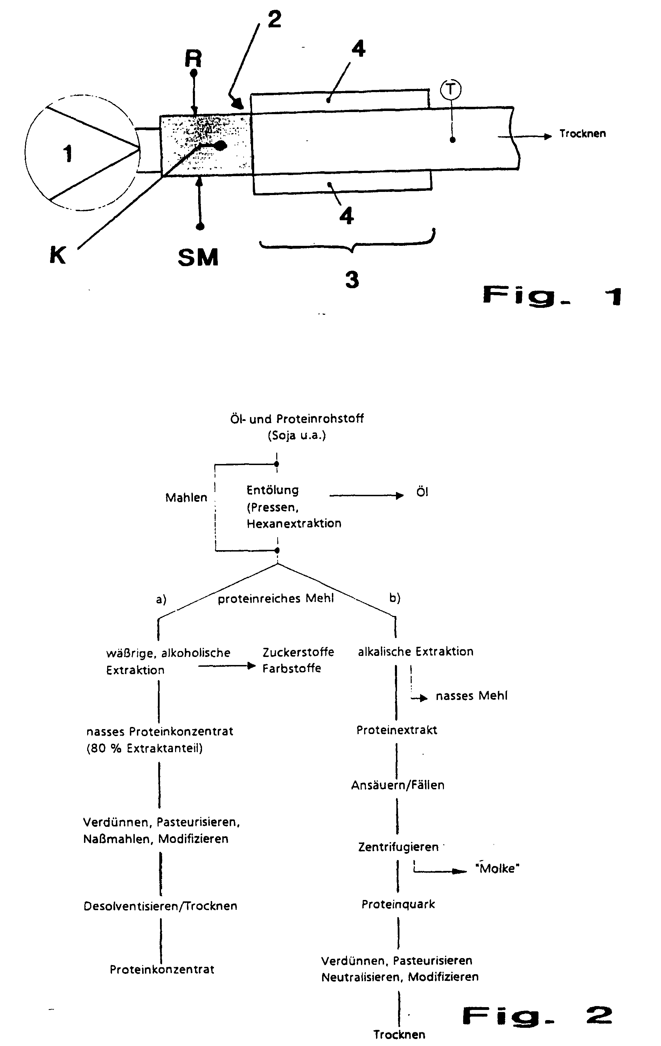

In Fig. 2 sind in einem Flußdiagramm zwei alternative Verfahren zur Gewinnung von Proteinkonzentraten und Proteinisolaten angegeben. Aus einem Öl- oder Proteinrohstoff, wie beispielsweise Soja, wird nach Mahlen, Pressen und/oder Hexanextraktion das Öl aus dem Proteinrohstoff gewonnen, so daß proteinreiches Mehl übrigbleibt. Im linken Verfahrensast gemäß Fig. 2 sind bekannte Verfahrensschritte zur Gewinnung von Proteinkonzentraten dargestellt. Das proteinreiche Mehl wird unter Zugabe wässriger, alkoholischer Lösemittel extrahiert, so daß nachfolgend ein nasses Proteinkonzentrat mit Extraktanteilen von bis zu 80% gewonnen werden. Das auf diese Weise erhaltene, nasse Proteinkonzentrat kann durch Zugabe weiterer Reagenzien sowie Einbringen mechanischer Energie mittels Mahl- und/oder Rührwerk sowie durch Erwärmen weiterbehandelt werden, um die Eigenschaften des Proteinkonzentrates zu verändern. Um das gewünschte Proteinkonzentrat in weitgehend trockener Form zu erhalten, sind Trockungsschritte vorzusehen, die in der Regel durch Wärmeenergieeintrag erfolgen.

Alternativ zur Gewinnung von Proteinkonzentrat ist die Gewinnung von Proteinisolaten nach den Verfahrensschritten, die im rechten Ast des Ablaufbaumes gemäß Fig. 2 dargestellt ist, vorzunehmen. Hierbei wird das proteinreiche Mehl durch Zugabe alkalischer Flüssigkeiten extrahiert, wobei der nasse Mehlanteil ausfällt. Der durch die alkalische Extraktion gewonnene Proteinextrakt wird durch Zugabe von sauren Reagenzien und durch Zentrifugieren zu Molke und Proteinquark aufgetrennt, wobei der Quark nachfolgend durch Verdünnen, Pasteurisieren, Neutralisieren sowie durch Modifizieren in seinen funktionellen Eigenschaften in gewünschter Weise manipuliert werden kann. Auch bei der Gewinnung von Proteinisolaten ist ein nachfolgender Trocknungsschritt erforderlich.

Die funktionellen Eigenschaften der Proteine können bereits auch bei der Saatverarbeitung, der Proteingewinnung und durch gezieltes Modifizieren, das am isolierten Protein erfolgt, beeinflußt werden. Siehe hierzu auch den Beitrag von Kinsella, J.E., "functional properties of soy proteins", Journal of Am. Oil Chem. Soc., 56 (1979), Seite 242 bis 246.

Das Modifizieren dient der Gewinnung von Proteinprodukten mit gezielt eingestellten, funktionellen Eigenschaften. So zeigen Proteine in Abhängigkeit ihrer Proteinstruktur und/oder pH-Wert gute Löslichkeiten oder gute Wasserbindekapazitäten auf, die insbesondere bei der Verwendung als Zusatzstoff in Wurst- und Fleischwaren besonders bedeutend sind. So ist insbesondere das Wasserbindevermögen von Proteinen bei Verwendung in Wurst- und Fleischwaren eine Eigenschaft mit großer Bedeutung. Die funktionelle Eigenschaft der Wasserbindung kann beispielsweise durch gezieltes thermisches Denaturieren der Proteinstruktur verbessert werden.

Auch sind Verfahren bekannt, die beispielsweise die Verarbeitung von Lupinensamen durch Rösten, Kochen, Schälen und Feinmahlen zur Änderung und Einstellung der funktionellen Eigenschaften des auf diese Weise gewonnenen Lupinenmehls führen. Die auf diese Weise erhaltenen Produkte werden zur Öl- und Wasserbindung in Lebensmitteln sowie auch zur Verbesserung der Lebensmitteltextur angeboten. Ein diesbezügliches Verfahren ist in der französischen Patentschrift FR 2 660 163 A1 beschrieben. Nachteilhaft ist jedoch, daß die mit diesen Verfahren erhaltenen Produkte nur einen eingeschränkten Proteingehalt von maximal 45% aufweisen, wodurch die Produkte der natürlichen Samenzusammensetzung entsprechen und keine Proteinkonzentrate sowie -isolate darstellen.

Aus einem Beitrag von King, J., Aguirre, C., "functional properties of lupin protein isolates", Journal of Food Science, 50 (1985), Seite 82 bis 87, ist ein Verfahren zur Gewinnung von Proteinisolaten aus Lupinen beschrieben sowie auf die Möglichkeit der Modifizierung der funktionellen Eigenschaften der Proteine hingewiesen. Durch Erhitzen der Proteinproben kann sowohl die Gelbildung als auch die Wasserbindekapazität positiv beeinflußt. Um beispielsweise die Gelbildungseigenschaft der Proteinisolate zu steigern, ist die Konzentration der Proteinisolate während der Erwärmung zu erhöhen, wodurch jedoch es jedoch zu einer hohen Viskosität der Proteinprobe kommt.

Die Erwärmung derart hochviskoser Proteinproben respektive Präparate birgt jedoch die Schwierigkeit einer möglichst gleichmäßigen Erhitzung. Hierfür sind indirekte Erhitzungsverfahren vorgeschlagen, die jedoch besondere Wärmetauscher, beispielsweise Koaxial-Wärmetauscher vorsehen und als solche eine kostspielige Apparatur darstellen. Die zähen Fließeigenschaften der hochviskosen Proteinpräparate und die zwingende Vermeidung von Überhitzungen beispielsweise an der Wärmetauscherwand, tragen zudem zu einem zusätzlichen Bedarf an großen und somit aufwendigen Konstruktionen bei. Würde man die Viskosität der Proteinpräparate durch Zugabe von Wasser verringern, würde auf der anderen Seite der Aufwand zur Verarbeitung insbesondere während der Trocknung wieder erhöht werden.

Mit der vorstehend beschriebenen konvektiven thermischen Erwärmungstechnik ist man jedoch nur in der Lage, eine gleichmäßige Erwärmung des Proteinpräparates im gesamten Volumen zu erreichen, sofern die Präparate durch Verdünnen mit Wasser als leichte, rührfähige bzw. fließfähige Dispersion vorliegen, so daß sich die Strukturänderung im Protein innerhalb des gesamten Proteinpräparatvolumens gleichmäßig einstellen kann. Bei der Erwärmung von einer hochkonzentrierten Proteindispersion mittels konvektiver thermischer Erwärmung backen insbesondere Proteine an den Heizflächen der Wärmetauschervorrichtung leicht an, zumal an diesen Kontaktflächen der unmittelbare Wärmeeintrag am größten ist.

Auch bilden sich im Wege der thermischen Konvektion im Inneren des zu erwärmenden Proteinpräparates starke Temperaturgradienten, die einer gleichmäßigen Einstellung funktioneller Eigenschaften im gesamten Proteinpräparatvolumen entgegenlaufen.

In einem Artikel von Armstrong et al, ACS Symposium Series 1979, S. 147-172 wird ein Verfahren zum Erwärmen von Sojabohnen mit Hilfe von Mikrowellenfeldern beschrieben, deren Felder typischerweise im Bereich von 2.450 MHz liegen. Die Mikrowellenbehandlung dient hauptsächlich zur Inaktivierung von Tripsieninhibitoren sowie Lipoxidaseenzymsystemen, also der gezielten Abtötung bestimmter in den Proteinen vorhandener Bestandteile. Im einzelnen geht aus der Druckschrift hervor, daß die Sojabohnen vor einer entsprechenden Mikrowellenbehandlung 12 Stunden in einem Wasserbad bei Raumtemperatur aufgeweicht werden, so daß die Sojabohnen einen Feuchtigkeitsgehalt von 62% aufweisen. In diesem Zustand werden die Sojabohnen, unter Zugrundelegung eines vorgegebenen Zeitplanes, einem Mikrowellenfeld mit einer Frequenz von 2,45 GHz ausgesetzt. Anschließend wird aus diesen vorbehandelten Sojabohnen Sojamilch gefertigt.

Zum einen ist zu dieser Lehre festzuhalten, daß die bei der Behandlung verwendeten Frequenzen in den Mikrowellenbereich hineinfallen und somit eine nur geringe Eindringtiefe in Proteinpräparaten aufweisen. Die Eindringtiefe von Mikrowellen kann jedoch erhöht werden, sofern der Feuchtigkeitsgehalt des zu erwärmenden Gutes erhöht wird. Dies wird, wie vorstehend beschrieben, durch die Vorbehandlung der Sojabohnen durch Einlegen in Wasser nicht zuletzt aus Gründen der Erhöhung der Eindringtiefe von Mikrowellen gemacht.

In dem Beitrag von Vasavada et al., Milchwirtschaft, 50(10) 1995, werden mögliche Auswirkungen einer Mikrowellenbehandlung auf Milch, die aus Gründen der Pasteurisierung hinsichtlich der Steigerung ihrer Haltbarkeit erwärmt wird, beschrieben. Auch in diesem Falle wird die Milch einem Mikrowellenfeld mit einer Frequenz von 2,45 GHz ausgesetzt. Milch weist jedoch einen sehr hohen Anteil an Wasser auf und kann bereits aus diesem Grunde nicht mit Proteinpräparaten, die einen möglichst hohen Trockensubstanzgehalt aufweisen, verglichen werden. Auch dient diese Mikrowellenbehandlung nicht dem Einstellen funktioneller Eigenschaften von Proteinpräparaten als vielmehr dem gezielten Abtöten von in der Milch vorhandener Mikroorganismen sowie Bestandteilen, die ursächlich für eine schnelle Verderblichkeit der Milch sind.

Die Lehre der CH-A-595 054 ebenso auf ein Verfahren zur Haltbarmachung von organischen Produkten oder Substanzen ab, das gemäß Angaben in Spalte 1, 2. Absatz jegliche Denaturierungen des Produktes vermeiden soll. Hierzu sieht das Verfahren ein Eintauchen des zu behandelnden Produktes in ein Flüssigkeitsbad vor, in dem elektromagnetische Felder das zu behandelnde Gut durchdringen sollen. Auch hier dient die Verwendung von Flüssigkeit wiederum der Erhöhung der Eindringtiefen der einzelnen elektromagnetischen Felder innerhalb des zu behandelnden Gutes.

Der Artikel von Young und Jolly, erschienen in "The Australian Journal of Dairy Technology", May 1990 beschäftigt sich grundsätzlich mit dem alltäglichen Einsatz von Mikrowellenfeldern zur Behandlung vorzugsweise von Lebensmitteln. Die Mikrowellenfelder, die typischerweise Frequenzen zwischen 300 MHz bis 300 GHz aufweisen, betreffen jedoch ausdrücklich Themen wie Erwärmung, Pasteurisierung, Kochen sowie Trocknen der einzelnen mit Mikrowellenfelder behandelten Lebensmitteln.

Aus der GB-A-2 098 040 ein Verfahren sowie eine Vorrichtung zur Sterilisation für Lebensmittel hervor, die den Einsatz von Mikrowellenfelder propagiert. Die Sterilisation trägt jedoch vielmehr zum gezielten Abtöten von Nahrungsbestandteilen bei.

Das gleiche kann auch zur US-A-5 403 564 angeführt werden, die jedoch eine Vorrichtung zur Sterilisation von Flüssigkeiten dient, die vorwiegend im medizinischen Bereich eingesetzt werden. Insbesondere handelt es sich hierbei um eine druckbeaufschlagte Sterilisation, die auf dem Prinzip des kontinuierlichen Durchflußverfahrens arbeitet.

### Darstellung der Erfindung

Der Erfindung liegt daher die Aufgabe zugrunde, ein Verfahren zur schonenden Modifizierung funktioneller Eigenschaften eines Proteinpräparates, vorzugsweise von Proteinisolat oder -konzentrat aus pflanzlichen Samen, durch Erwärmen des Proteinpräparates, für die Herstellung von Frisch- oder Trockenprodukten als Grundoder Zusatzstoff für eiweißhaltige Lebensmittel, derart weiterzubilden, daß eine gleichmäßige, gezielte und definierte Einstellung funktioneller Eigenschaften im gesamten Proteinpräparatvolumen möglich ist. Insbesondere sollen die mit der herkömmlichen Erwärmung im Rahmen thermischer Konvektion verbundenen Nachteile vermieden werden. Auch soll eine Vorrichtung zum schonenden Erwärmen eines Proteinpräparates angegeben werden, die einen möglichst geringen konstruktiven und kostenaufwendigen Aufwand erfordert.

Die Lösung der der Erfindung zugrundeliegenden Aufgabe ist im Anspruch 1 angegeben. Die Erfindung vorteilhaft weiterbildende Merkmale sind Gegenstand der Unteransprüche.

Erfindungsgemäß ist ein Verfahren zur schonenden Modifizierung funktioneller Eigenschaften eines Proteinpräparates, vorzugsweise Proteinisolat oder -konzentrat aus pflanzlichen Samen, durch Erwärmen des Proteinpräparates, für die Herstellung von Frisch- oder Trockenprodukte als Grund- oder Zusatzstoff für eiweißhaltige Lebensmittel, derart weitergebildet, dass das Proteinpräparat als pastöses Fluid mit einem Trockensubstanzgehalt bis zu 55 % vorliegt und in einem elektromagnetischen Hochfrequenzfeld mit Frequenzen von 10 bis 40 MHz bei weitgehend gleichmäßiger Temperaturverteilung über das gesamte Proteinpräparatvolumen erwärmt wird.

Der Erfindung liegt die Idee zugrunde, das sehr zähfließende Proteinpräparat mittels durchdringender Erhitzung zu erwärmen, um auf diese Weise den Energieeintrag möglichst schnell und gleichmäßig im gesamten Volumen des zu erwärmenden Proteinpräparates zu deponieren. Es ist erfindungsgemäß erkannt worden, daß der Einsatz von Hochfrequenzfeldern eine gleichmäßige, über das gesamte Präparatvolumen bewirkenden Wärmeeintrag bewirkt, der zudem durch Regelung der elektrischen Felder direkt und unmittelbar auf ein definiertes Maß eingestellt werden kann. Die mittels Hochfrequenzfelder erzeugbare durchdringende Erhitzung für das Proteinpräparat mit zähem Fließverhalten ist auch für Produkte mit hohem Feststoffanteil geeignet, da der Energieeintrag gleichförmige Erwärmung bewirkt, ohne dabei lokale Überhitzungen, wie beispielsweise an Gefäßwänden, zu verursachen. Zur Gelbildung der Proteine können diese auch ohne mechanischen Eintrag, wie beispielsweise Rührwerk, direkt erhitzt werden.

Die dielektrische Erhitzung erfolgt erfindungsgemäß unter Verwendung von Hochfrequenzfeldern mit Frequenzen zwischen 10 und 40 MHz. Derartige HF-Felder können Proteinpräparate, in denen Proteine als pastöses Fluid vorliegen, homogen im gesamten Proteinpräparatvolumen erwärmen. Insbesondere läßt sich auf diese Weise die Löslichkeit, die Viskosität, das Wasserbindungs-, Ölbindungs- und/oder Gelbildungsverhalten sowie die Dispergierbarkeit des Proteins einstellen.

Durch den Einsatz von HF-Feldern können Proteinpräparate mit einem Trockensubstanzgehalt von bis zu 45% ohne lokale Überhitzung erwärmt werden.

Durch die gleichmäßige Ausbildung einer Erwärmungstemperatur und die unmittelbare Einflußnahme des Energieeintrages in das zu erwärmende Proteinpräparat durch Regelung der HF-Energie ist es möglich, das Proteinpräparat über sehr enge Zeitfenster auf ein möglichst exaktes Temperaturniveau zu erwärmen. So kann ein gezielter Energieeintrag innerhalb von Sekunden realisiert werden, indem beispielsweise das Proteinpräparat auf ein vorgegebenes Temperaturniveau mit einer Schwankungsbreite von wenigen °C erwärmt werden kann. Typische Erwärmungstemperaturen betragen hierbei zwischen 70° C und 90°C.

Eine vorteilhafte Vorrichtung zur Durchführung des vorstehend beschriebenen Verfahrens weist grundsätzlich eine Fördereinrichtung auf, die das Proteinpräparat in eine Erhitzerzone fördert. Die Erhitzerzone besteht im wesentlichen aus einem Hohlkanal, der von einem, von HF-Feldern durchdringbarem Material umgeben ist. Ferner ist eine Elektrodenanordnung vorgesehen, die innerhalb der Erhitzerzone ein homogenes HF-Feld generiert. Schließlich ist eine Fördereinheit vorgesehen, die das zu erwärmende Proteinpräparat durch den Hohlkanal der Erhitzerzone fördert.

### Kurze Beschreibung der Zeichnungen

Zur Darstellung der Erfindung wird ohne Beschränkung des allgemeinen Erfindungsgedankens ein Ausführungsbeispiel anhand der nachstehenden Figuren erläutert. Es zeigen:
- Fig. 1: Vorrichtung zur Erwärmung eines Proteinpräparates gemäß dem vorstehend beschriebenen Verfahren, sowie
- Fig. 2: Ablaufschema für ein Verfahren zur Gewinnung von Proteinkonzentraten sowie Proteinisolaten.

### Kurze Beschreibung eines Ausführungsbeispiels

Fig. 1 zeigt eine Vorrichtung zur schonenden, gleichmäßigen Erwärmung eines Proteinpräparates zur definierten Modifizierung funktioneller Eigenschaften des im Präparat vorhandenen Proteins. Eine Förderpumpe 1 fördert das, für gewöhnlich zähfließende, Proteinpräparat, das beispielsweise als Quark aus einer Fällung hervorgeht, in Richtung eines Hohlkanals 2, der vorzugsweise aus Quarzglas gefertigt ist. Der Hohlkanal 2 weist vor der Erhitzerzone 3 einen Kanalbereich K auf, in dem das Proteinpräparat mit Hilfe statischer Mischer SM homogenisiert wird und/oder Reagenzien R zur gezielten Modifikation eingearbeitet werden können. Die Erhitzerzone 3 ist durch HF-Elektroden 4 begrenzt, die innerhalb des Hohlkanals 2 ein homogenes HF-Feld generieren. Es ist darauf zu achten, daß das zu erwärmende Proteinpräparat möglichst ohne Lufteinschlüsse in die Erhitzerzone 3 geleitet wird, zumal Lufteinschlüsse Isolationsbereiche für die HF-Felder darstellen. Vorzugsweise werden die Elektroden auf den aus Quarzglas gefertigten Hohlkanal 2 aufgeklebt.

Das gleichmäßig durch die Erhitzerzone 3 geförderte Proteinpräparat wird durch die HF-Felder homogen erwärmt und wird auf der in der Figur dargestellten rechten Seite aus der Erhitzungszone 3 zur nachfolgenden Trocknung geleitet.

Die in der Erhitzerzone 3 erreichbaren Temperaturen zwischen 70°C und 90°C führen im Proteinpräparat zu thermischen Proteindenaturierungen, die mit Strukturänderungen der Proteine verbunden sind.

Mit Hilfe des erfindungsgemäßen Verfahrens sowie Vorrichtung ist eine Reduktion des Wasserbedarfs und des Energiebedarfs zur Proteinfunktionalisierung verbunden. Zur Funktionalisierung kann auf Verdünnungsschritte und damit auf energieintensive zusätzliche Trocknungsschritte verzichtet werden. Insofern trägt das erfindungsgemäße Verfahren erheblich zur Energieverbrauchssenkung bei. Ebenso ist der apparative Aufwand zur gleichmäßigen Erwärmung des Proteinpräparates sehr gering.

Mit Hilfe des erfindungsgemäßen Verfahrens unter Einsatz von HF-Feldern können schnittfeste Gele durch Einsatz hoher Protein- und Trockensubstanzkonzentrationen in der Probe respektive in dem Proteinpräparat gewonnen werden. So ermöglicht insbesondere die erfindungsgemäße Erhitzung eine Erwärmung von hochviskosen Proteinen, ohne dabei Scherkräfte durch Rühren oder Schaben auf das zu erwärmende Protein einwirken zu lassen.

Durch die Geschwindigkeit, mit der das zu erwärmende Proteinpräparat durch die Erhitzungszone gefördert wird, ist die Zeitdauer des Wärmeeintrages regelbar. Ebenso ist im Anschluß an die Erhitzungszone eine weitere Rohrleitung anbringbar, in der das erwärmte Proteinpräparat vortrocknen kann.

Ferner ist es möglich, das als Proteinquark vorliegende Proteinpräparat in Folienschläuche, beispielsweise in Endloshüllen, abzufüllen und diese ohne vorheriges Mischen durch die Erhitzungszone zu fördern. Mit diesem Prozeß läßt sich ein fertig verpacktes und pasteurisiertes Proteingel nach Abkühlen als schnittfestes Lebensmittel herstellen. Vorteilhaft ist die Gelbildung und Pasteurisierung in einem einzigen Schritt innerhalb der Verpackung, so daß Vorteile unter dem Aspekt der Keimfreiheit damit verbunden sind.

## Patentansprüche

1. Verfahren zur schonenden Modifizierung funktioneller Eigenschaften eines Proteinpräparates, vorzugsweise Proteinisolat oder -konzentrat aus pflanzlichen Samen, durch Erwärmen des Proteinpräparates, für die Herstellung von Frisch- oder Trockenprodukte als Grund- oder Zusatzstoff für eiweißhaltige Lebensmittel, **dadurch gekennzeichnet, daß** das Proteinpräparat als pastöses Fluid mit einem Trockensubstanzgehalt bis zu 55 % vorliegt und in einem elektromagnetischen Hochfrequenzfeld mit Frequenzen von 10 bis 40 MHz bei weitgehend gleichmäßiger Temperaturverteilung über das gesamte Proteinpräparatvolumen erwärmt wird.

2. Verfahren nach Anspruch 1,
**dadurch gekennzeichnet, daß** durch die gleichmäßige Erwärmung die Löslichkeit, die Viskosität, das Wasserbindungs-, Ölbindungs- und/oder Gelbildungsverhalten sowie die Dispergierbarkeit des Proteinpräparates eingestellt wird.

3. Verfahren nach Anspruch 1 oder 2,
**dadurch gekennzeichnet, daß** während der Erwärmung des Proteinpräparates ein pH-Wert von 2 bis 12, vorzugsweise von 4 bis 8, eingestellt wird.

4. Verfahren nach einem der Ansprüche 1 bis 3,
**dadurch gekennzeichnet, daß** das Proteinpräparat vor der Erwärmung mit Reagenzien zur Modifikation versetzt und/oder homogenisiert wird.

5. Verfahren nach einem der Ansprüche 1 bis 4,
**dadurch gekennzeichnet, daß** das Proteinpräparat über einen vorgegebenen Zeitraum erwärmt wird, innerhalb dem eine Erwärmungstemperatur von 60 - 95 °C, vorzugsweise von 70°C und 90°C, erreicht wird.

6. Verfahren nach einem der Ansprüche 1 bis 5,
**dadurch gekennzeichnet, daß** eine Erwärmungstemperatur innerhalb weniger Sekunden eingestellt wird und ein enges Temperatur-Verweilzeitspektrum in allen Volumenbereichen des Proteinpräparates vorliegt.

7. Verfahren nach einem der Ansprüche 1 bis 6,
**dadurch gekennzeichnet, daß** das zu erwärmende Proteinpräparat während der Erwärmung von einer, von HF-Strahlen durchdringbaren Verpackung eingeschlossen ist.

## Claims

1. Method for sparingly modifying the functional properties of a protein preparation, preferably protein isolate or protein concentrate from vegetable seeds, by means of heating the protein preparation for the production of fresh or dry products as base material or additive for protein-containing foodstuffs, **characterised in that** the protein preparation occurs as a pasty fluid with a dry substance content of up to 55 % and is heated in an electromagnetic high frequency field at frequencies of 10 to 40 MHz with extensively uniform temperature distribution over the entire protein preparation volume.

2. Method according to claim 1,
**characterised in that** the solubility, the viscosity, the water binding-, oil binding- and/or gel formation behaviour and the dispersion capacity of the protein preparation are adjusted by uniform heating.

3. Method according to claim 1 or 2,
**characterised in that** a pH value of 2 to 12, preferably of 4 to 8 is set during heating of the protein preparation.

4. Method according to one of the claims 1 to 3,
**characterised in that** the protein preparation is mixed with reagents for modification and/or homogenised before heating.

5. Method according to one of the claims 1 to 4,
**characterised in that** the protein preparation is heated over a prescribed period, within which a heating temperature of 60 - 95 °C, preferably 70 °C and 90 °C, is achieved.

6. Method according to one of the claims 1 to 5,
**characterised in that** a heating temperature is set within a few seconds and a narrow temperature-dwell time spectrum occurs in all of the volume regions of the protein preparation.

7. Method according to one of the claims 1 to 6,
**characterised in that** the protein preparation to be heated is enclosed by packaging which can be penetrated by HF radiation during heating.

## Revendications

1. Procédé de modification, sans dénaturation des propriétés fonctionnelles d'une préparation de protéines, de préférence d'un isolat ou concentré de protéines à partir de graines végétales, par chauffage de la préparation de protéines, pour la production de produits frais ou secs sous forme de matériau de base ou d'additifs pour aliments contenant de l'albumine,
**caractérisé en ce que**
la préparation de protéines se présente sous la forme d'un fluide pâteux ayant une teneur en substance sèche allant jusqu'à 55 % et dans un champ haute fréquence électromagnétique avec des fréquences de 10 à 40 MHz avec une répartition de températures largement régulière sur l'ensemble du volume de la préparation de protéines.

2. Procédé selon la revendication 1,
**caractérisé en ce que**
grâce au chauffage régulier on régule la solubilité, la viscosité, la comportement de liaison à l'eau, de liaison à l'huilé et/ou de gélification ainsi que la dispersabilité de la préparation de protéines.

3. Procédé selon la revendication 1 ou 2,
**caractérisé en ce qu'**
au cours du chauffage de la préparation de protéines on établit un pH de 2 à 12, de préférence de 4 à 8.

4. Procédé selon l'une des revendications 1 à 3,
**caractérisé en ce qu'**
on mélange et/ou on homogénéise la préparation de protéines avant chauffage avec des réactifs aux fins de modification.

5. Procédé selon l'une des revendications 1 à 4,
**caractérisé en ce qu'**
on chauffe la préparation de protéines pendant un intervalle de temps prédéterminé, dans lequel on atteint une température de chauffage de 60 à 95°C, de préférence de 70 à 90°C.

6. Procédé selon l'une des revendications 1 à 5,
**caractérisé en ce qu'**
on établit une température de chauffage en quelques secondes et **en ce qu'**on a un spectre de température-temps de séjour dans toutes les parties de volume de la préparation de protéines.

7. Procédé selon l'une des revendications 1 à 6,
**caractérisé en ce que**
la préparation de protéines à chauffer est incluse au cours du chauffage d'un emballage perméable aux rayons HF.
